# EUROPÄISCHE PATENTSCHRIFT

(11) **EP 1 558 709 B1**
(45) Veröffentlichungstag und Bekanntmachung des Hinweises auf die Patenterteilung: **09.03.2011**
(21) Anmeldenummer: 03756412.7
(22) Anmeldetag: 20.10.2003
(51) Int. Cl.: C10J 3/46, C10J 3/52, B01J 19/08, C10J 3/18

(54) **VERFAHREN ZUM VERGASEN VON KOHLENSTOFF ENTHALTENDEN SUBSTANZEN DURCH EIN PLASMA**
METHOD FOR GASIFYING SUBSTANCES CONTAINING CARBON BY USING A PLASMA
PROCEDE POUR GAZEIFIER AU MOYEN D'UN PLASMA DES SUBSTANCES CONTENANT DE L'HYDROCARBURE

(30) Priorität: 04.11.2002 AT 16622002
(43) Veröffentlichungstag der Anmeldung: 03.08.2005
(73) Patentinhaber: NEW PLASMA GMBH & CO KEG, 2352 Gumpoldskirchen (AT)
(72) Erfinder: STARI, Johannes, A-2352 Gumpoldskurchen (AT); SIMMEL, Johannes, A-7031 Krensdorf (AT)
(74) Vertreter: Itze, Peter
(86) Internationale Anmeldenummer: PCT/AT2003/000315
(87) Internationale Veröffentlichungsnummer: WO 2004/041974

(56) Entgegenhaltungen:
- WO-A-01/05910
- WO-A-95/03374
- WO-A-03/018721
- FR-A- 2 578 263
- US-A1- 2001 047 614

## Beschreibung

Die Erfindung bezieht sich auf ein Verfahren zum Aktivieren, insbesondere zum Vergasen, von Kohlenstoff enthaltenden Substanzen, wobei ein Fluid über in Strömungsrichtung des Fluides hintereinander angeordnete mit Gleichstrom gespeisten Elektroden geführt wird und das Fluid in ein Plasma übergeführt wird.

Unter einem Plasma ist unter anderem ein Gas zu verstehen, das sehr hohe Temperatur, also z. B. 7.000° K aufweist. Wird ein derartiges Plasma durch Hindurchleiten eines Gasstromes durch mit Gleichstrom gespeisten Elektroden erhalten, so kann dieser Plasmagasstrom vielfältig zum Einsatz gebracht werden. So ist es beispielsweise bekannt, Erze unter zusätzlichem Einsatz von Reduktionsmitteln zu verhütten, brennbare Stoffe einer Pyrolyse zu unterwerfen. Voraussetzung für diese Verfahren ist ebenfalls, dass der Reaktor, in welchem diese Reaktionen durchgeführt werden, besonders hitzebeständig ist und dass die gebildeten Reaktionsprodukte, insbesondere eine gebildete Schlacke, nicht zu Inkrustationen des Erzes oder der zu pyrolysierenden Substanzen führt.

Aus der US 6,155,182 A werden ein Verfahren und eine Vorrichtung zum Pyrolysieren von Abfallstoffen, wie Müll, medizinische Abfälle, Flüssigkeiten u. dgl., bekannt, wobei einerseits ein brennbares Gas und andererseits ein Abfallstoff, u. zw. eine bei Reaktionstemperatur flüssige Schlacke entsteht. Die Pyrolyse wird in strenger Abwesenheit von Sauerstoff durchgeführt, so dass auch das Fluid, mit welchem das Plasma gebildet wird, keinen Sauerstoff enthalten darf. Die zu vergasenden Stoffe werden im Reaktor auf einer zur Horizontalen leicht geneigten Fläche vorgelegt, so dass die zu vergasenden Stoffe während ihrer Beaufschlagung mit dem Plasma in einem Schlackebad liegen. Dabei kommt es zu Inkrustationen, so dass keine vollständige Vergasung der Substanzen erreicht werden kann. Weiters entsteht bei einer Pyrolyse ein fester Rückstand, so nicht weitere Reaktanden vorhanden sind, in Form von Kohlenstoff, welcher nicht zur Deponierung geeignet ist.

Dokument WO 01/0510 beschreibt ein Verfahren zur Vergasung Von Abfällen mit Plasmaelektroden. Die Elektroden sind nicht in Strömungsrichtung des Fluides hintereinander augeordnet. Der vorliegenden Erfindung ist zur Aufgabe gesetzt, ein Verfahren zu schaffen, bei dem kohlenstoffhältige Substanzen vergast werden können, wobei die Substanzen nicht während der Vergasung von den Oxidationsprodukten eingeschlossen werden, das ermöglicht, dass die Elektroden nicht durch Schlacke od. dgl. umschlossen werden, wodurch ein Stillstand der Bildung des Plasmas eintreten würde, und das weiters ermöglicht, auch überschüssig vorhandenen Kohlenstoff zu vergasen, so dass möglichst geringe Rückstände vorliegen, die unbedenklich einer Deponierung zugeführt werden können. Weiters soll der Wirkungsgrad des Vergasens verbessert werden, so dass pro umgewandelter Energieeinheit, z. B. gewonnener Strom od. dgl., weniger Kohlendioxid entsteht.

Die vorliegende Erfindung geht von einem Stand der Technik aus, wie er durch die US 6,155,182 A gegeben ist.

Das erfindungsgemäße Verfahren zum Aktivieren, insbesondere zum Vergasen von Kohlenstoff enthaltenden Substanzen, wobei ein Fluid über in Strömungsrichtung des Fluides hintereinander angeordneten mit Gleichstrom, z. B. gepulster Gleichstrom, gespeisten Elektroden geführt wird, und das Fluid in ein Plasma übergeführt wird, in welches die Kohlenstoff enthaltenden Substanzen eingebracht werden, das gebildete Gas und gebildete feste und/oder flüssige Reaktionsprodukte, z. B. Schlacke, Glas, Asche, mit Schwerkraft abgezogen werden, besteht im Wesentlichen darin, dass die Kohlenstoff enthaltenden Substanzen, insbesondere partikulierte Hölzer, laufend in das Plasma in Abstand und oberhalb der durch Schwerkraft abziehenden festen und/oder flüssigen Reaktionsprodukte eingebracht werden, und das Fluid mit Sauerstoff molekular und/oder chemisch gebunden enthaltende Stoffe, z. B. Gase, verdampfte Flüssigkeiten oder Aerosole, gebildet wird, und das gebildete Gas abgezogen, gegebenenfalls gekühlt und/oder gereinigt, und sodann oxidiert wird. Ein derartiges Verfahren ist zur Verwertung von unterschiedlichsten kohlenstoffhaltigen Substanzen geeignet. So kann beispielsweise eine partielle Vergasung von Abfallstoffen durchgeführt werden, aber es besteht auch die Möglichkeit, dieses Verfahren lediglich zur Energieumwandlung mit kohlenstoffhältigen Substanzen einzusetzen. Das nach diesem Verfahren gewonnene brennbare Gas ist sodann unterschiedlich verwertbar.

Dadurch, dass das Fluid über hintereinander angeordnete Elektroden geführt wird und erst nach den Elektroden auf die umzusetzenden Substanzen gelangt, kann eine Kontaminierung der Elektroden mit Asche, Schlacke od. dgl. einfach vermieden werden. Durch das Abziehen der Schlacke durch Schwerkraft können zusätzliche Aggregate, wie Pumpen, die zur Störung des Verfahrens führen könnten, vermieden werden. Werden die Substanzen laufend in das Plasma eingeführt, so kann ein in etwa kontinuierliches Verfahren ermöglicht werden, wobei gleichzeitig die Ableitung der Oxidationsprodukte, z. B. Schlacke od. dgl., leichter durchgeführt werden kann und damit Inkrustationen ebenfalls leichter vermieden werden können. Durch das Eindringen der kohlenstoffhältigen Substanzen in das Plasma in Abstand und oberhalb der festen und/oder flüssigen Reaktionsprodukte wird erneut eine besonders gute Trennung von Schlacke od. dgl. und den zu oxidierenden Produkten erreicht. Werden als Fluid sauerstoffhältige Substanzen, sei es molekular oder als chemische Verbindung eingesetzt, so kann sichergestellt werden, dass auch Substanzen mit einem hohen Kohlenstoffgehalt vergast werden können. Wird das gebildete Gas vor der Reinigung gekühlt, kann eine besonders effiziente Reinigung des Gases durchgeführt werden, so dass das Gas nicht nur einer Verbrennung zur Gewinnung von thermischer Energie zugeführt werden kann, sondern auch als Treibstoff zum Einsatz gelangen kann.

Werden die Kohlenstoff enthaltenden Substanzen auf einem bewegten Rost vorgelegt, der z. B. mit Keramik ausgebildet ist, so tritt eine Umwälzung der zu oxidierenden Substanzen ein, womit die Oxidationsprodukte besonders leicht von den zu oxidierenden Substanzen abgegeben werden können.

Die kohlenstoffhältigen Substanzen können auch über zumindest eine Schnecke im Plasma gehalten werden, so dass durch die Schnecke oder auch mehrere nebeneinander liegenden Schnecken ein Rost gebildet wird.

Um eine Umwälzung der kohlenstoffhältigen Substanzen zu bewirken, kann zumindest eine Schnecke um eine etwa horizontale Achse gedreht werden.

Eine weitere Möglichkeit besteht darin, dass die kohlenstoffhältigen Substanzen durch einen gegen die Schwerkraft gerichteten Gasstrom im Plasma gehalten werden, wobei durch das unterschiedliche spezifische Gewicht zwischen den oxidierten Substanzen und den kohlenstoffhältigen Substanzen ein Abtransport, beispielsweise der Schlacke nach unten über die Schwerkraft erfolgen kann, wohingegen die zu oxidierenden Produkte in der Wirbelschichte verbleiben.

Werden die mit Schwerkraft abgezogenen, insbesondere abtropfenden, Reaktionsprodukte mit Wasser abgekühlt, so können diese besonders rasch abgezogen werden.

Erfolgt die Abkühlung in einem Wasserbad, so besteht die Möglichkeit, beispielsweise abtropfende Schlacke oder Gläser partikuliert zu erhalten, womit eine Manipulation der Reaktionsprodukte erleichtert wird und auch eine Deponierung einfach durchzuführen ist.

Kommen die abgezogenen, insbesondere abtropfenden Reaktionsprodukte auf ein bewegten endloses Band zum Aufliegen, so kann das Abkühlen auf demselben erfolgen, wobei weiters auch wieder leicht manipulierbare Produkte entstehen, die kein hohes Gesamtgewicht aufweisen müssen.

Kommen die mit Schwerkraft abgezogenen, insbesondere abtropfenden, Reaktionsprodukte auf einer rotierenden Scheibe zum Aufliegen, so kann auf derselben ein Abkühlen durchgeführt werden, wobei gleichzeitig die Scheibe durch die Zentrifugalkraft von den Reaktionsprodukten befreit wird, womit eine laufende Reinigung derselben vorliegt.

Werden die, insbesondere flüssigen, Reaktionsprodukte in einer Kokille abgekühlt, so können geformte Produkte, wie beispielsweise Ziersteine, Pflastersteine u. dgl., gebildet werden.

Wird ein Luft enthaltendes Fluid zur Bildung des Plasmas verwendet, so ist auf einfache Weise eine Gasversorgung sichergestellt, wobei weiters Sauerstoff zur Oxidation von Kohlenstoff in Überschuss zur Verfügung gestellt werden kann.

Wird das gebildete Gas mit einem Sauerstoff enthaltenden Gas vermischt und einem Gasmotor oder Turbine zugeführt, so kann eine weitere Energieumwandlung, beispielsweise mit einem Generator in elektrische Energie erfolgen.

Wird das im Gasmotor bzw. Turbine oxidierte Gas teilweise als Fluid für das zu bildende Plasma eingesetzt, so kann teilweise auch ein Kreislauf von Kohlendioxid erreicht werden, da im Plasma aufgrund der hohen Temperaturen aus Kohlendioxid, Kohlenmonoxid und Sauerstoff gebildet wird.

Im folgenden wird die Erfindung anhand der Zeichnungen und des Beispieles näher erläutert.

Es zeigen:
- Fig. 1: in schematischer Darstellung eine Vorrichtung zur Durchführung des erfindungsgemäßen Verfahrens,
- Fig. 2: einen Plasmabrenner,
- Fig. 3: ein endloses Band zur Aufnahme und Abscheidung der Reaktionsprodukte,
- Fig. 4: eine etwa horizontal rotierende Scheibe zur Aufnahme und Abscheidung der Reaktionsprodukte,
- Fig. 5: einen Reaktor mit Wanderrost,
- Fig. 6: einen Reaktor mit Wirbelschicht und
- Fig. 7: einen Reaktor mit Schnecken.

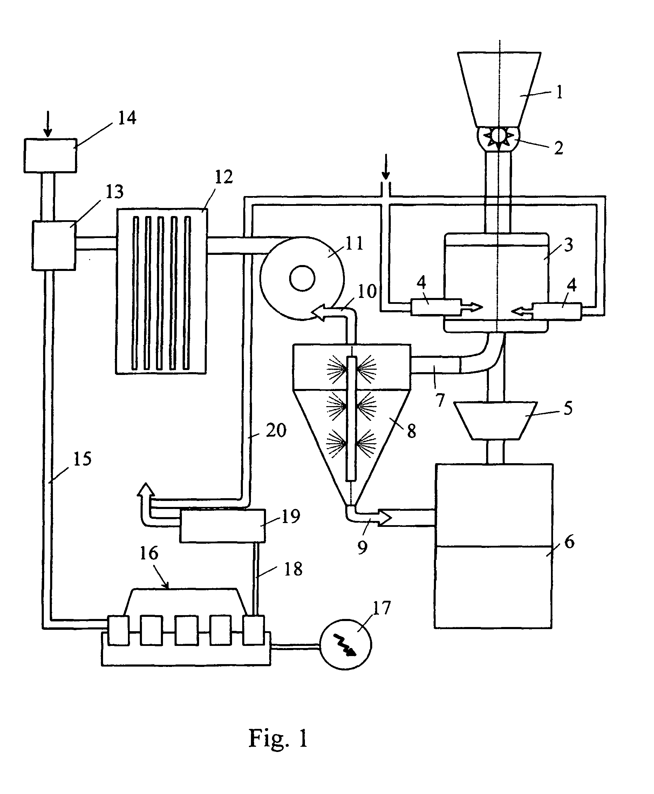

Mit der in Fig. 1 dargestellten Anlage wird gleichzeitig der Verfahrensablauf dargestellt. Über die Materialaufgabe 1 können kohlenstoffhältige Substanzen, wie beispielsweise Klärschlamm oder auch wie im vorliegenden Fall Holzchips unterschiedlicher Größe, beispielsweise mit einer Länge zwischen 2 cm und 10 cm und einer mittleren Breite und Höhe von 1 cm bis 2 cm, aufgegeben werden. Über die Schleuse 2 werden die Kohlenstoff enthaltenden Substanzen in den Reaktor 3 gefördert. In Schwerkraftrichtung gesehen am unteren Ende des Reaktors 3 sind Plasmabrenner 4 angeordnet, also Vorrichtungen, über welche im vorliegenden Fall ein gasförmiges Plasma erzeugt wird. Die Oxidationsprodukte, also Schlacke, Glas, Asche, werden nach unten abgezogen und kommen zu einem Verfestiger 5, in welchem die Oxidationsprodukte abgeschieden werden und sodann in dem Sammelbehälter 6 gesammelt und bei Bedarf abtransportiert werden. Das im Reaktor, welcher keramisch ausgekleidet ist, entstehende Gas gelangt über die Leitung 7 in die Gaswäsche 8, in welcher das Gas mit versprühtem Wasser abgekühlt und gereinigt wird. Das abfließende Wasser gelangt über die Leitung 9 in den Sammelbehälter 6, in welchem bereits Wasser vorgelegt ist, so dass die Schlacke, Glas od. dgl. abgekühlt werden kann. Das gereinigte Gas gelangt über die Leitung 10 in den Verdichter 11, in welchem das Gas auf 2 Bar verdichtet und sodann erneut im Filter 12 gereinigt wird, weiters im Gasmischer 13 mit Luft aus der Atmosphäre, die über das Luftfilter 14 zugeführt wird, vermischt wird und gelangt sodann über die Leitung 15 zum Gasmotor 16, der seinerseits einen Generator 17 antreibt. Das aus dem Motor austretende Abgas gelangt über die Leitung 18 in die Abgasreinigung 19 und wird teilweise in die Atmosphäre abgegeben bzw. über die Leitung 20 erneut den Plasmabrennern 4 zugeführt. Die Vorrichtung arbeitet bei Atmosphärendruck, kann jedoch mit entsprechender Ausbildung der Schleuse 2 und des Sammelbehälters auch bei Über- und Unterdruck arbeiten.

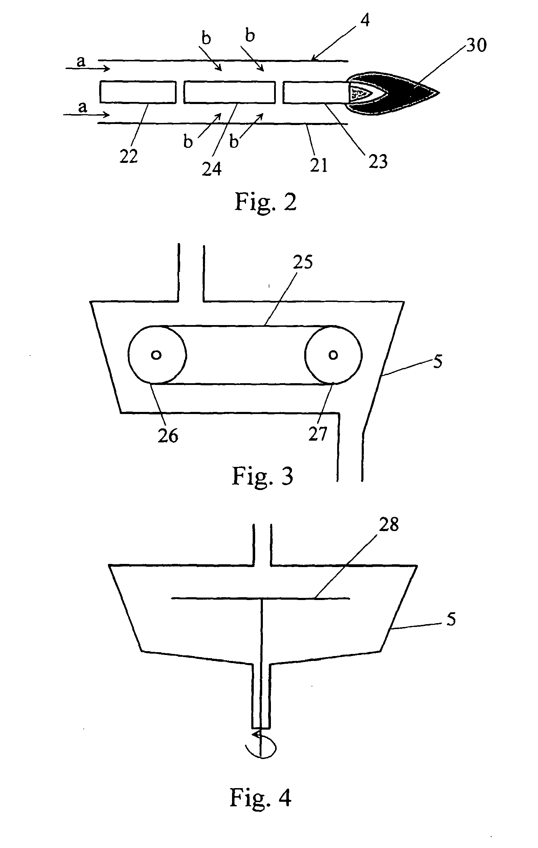

Der in Fig. 2 dargestellte Plasmabrenner 4 weist ein äußeres Hüllrohr 21 auf, in dem Elektroden 22 und 23 angeordnet sind, die in Abstand zueinander über einen Isolationskörper 24 gehalten sind. Die Luft, welche als plasmabildendes Gas dient, strömt, wie durch die Pfeile a angezeigt, hintereinander an den Elektroden vorbei. Der Isolierkörper 24 wird über Wasserstrahlen, schematisch mit den Pfeilen b dargestellt, abgekühlt. Das Wasser verdampft und dient gleichzeitig als plasmabildendes Medium. Die Elektroden werden mit einem von einem Funkengenerator gepulsten Gleichstrom einer Spannung von 200 V versorgt.

In Fig. 3 ist ein Verfestiger 5 mit einem endlosen Band 25 dargestellt, auf das die oxidierten Produkte durch Schwerkraft zum Aufliegen kommen und sodann auf dem um die zwei Rollen 26 und 27 umgelenkten Band 25 zur Abkühlung kommen. Das Band 25 selbst besteht aus Stahl und weist daher eine hohe Wärmeleitfähigkeit auf, womit die Abkühlung auf einfache Weise gewährleistet ist.

In Fig. 4 ist ein Verfestiger mit einer um eine vertikale Achse horizontal drehbaren Scheibe 28 dargestellt, auf welcher die Oxidationsprodukte zu liegen kommen und durch die Zentrifugalkraft abgeschleudert werden, und sodann in den Sammelbehälter 6 gesammelt werden können.

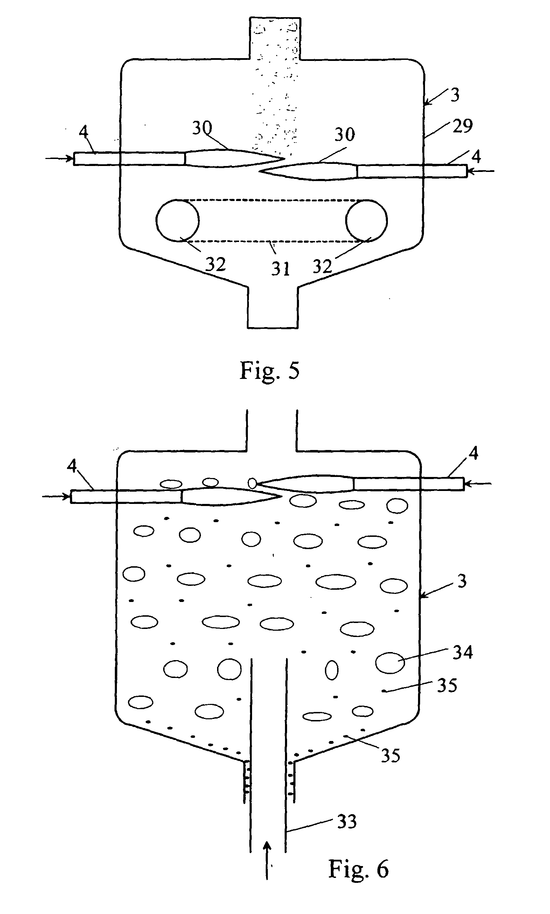

In Fig. 5 ist der Reaktor 3 dargestellt, welcher Wandungen 29 aus keramischem Material aufweist. Durch die Wandungen sind zwei Plasmabrenner 4 hindurchgeführt, deren Plasma 30 sich oberhalb des Wanderrostes 31 befindet. Der Wanderrost 31 besteht ebenfalls aus Keramikelemente, wobei stabförmige Elemente vorgesehen sind, die an ihren beiden Enden Augen aufweisen, durch welche Keramikstäbe geführt sind, so dass ein in sich geschlossener Wanderrost erhalten werden kann, der über die beiden Rollen 32 umgelenkt und angetrieben wird.

In Fig. 6 ist ein weiterer Reaktor 3 dargestellt, der an seinem unteren Ende eine Gaszuführung 33 aufweist, über welche ein Trägergas für die kohlenstoffhältigen Substanzen 34 in einem Wirbelbett eingeleitet wird, wohingegen die oxidierten Substanzen 35 ein schwereres spezifisches Gewicht aufwe.isen und entgegen den Gasstrom aufgrund der Schwerkraft in eine nicht dargestellte wassergekühlte Kokille fließen.

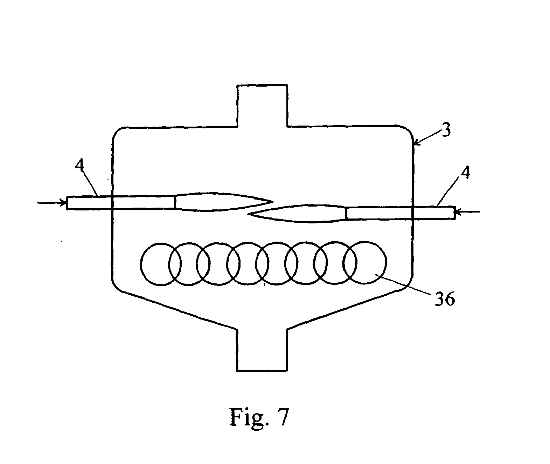

In Fig. 7 ist ein weiterer Reaktor dargestellt, bei welchem der Rost durch um horizontale Achsen drehende Schnecken 36 gebildet ist, bei welchen die Oxidationsprodukte schwerkraftgemäß nach unten abgezogen werden und noch nicht oxidierte Produkte oberhalb der Schnecke verbleiben.

Bei allen dargestellten Ausführungsformen ist sichergestellt, dass die Kohlenstoff enthaltenden Substanzen nicht in einem Bad der Reaktionsprodukte während ihrer Oxidation verbleiben, sondern laufend von Reaktionsprodukten an ihrer Oberfläche befreit werden, so dass eine höchste Reaktivität gegeben ist.

### Beispiel:

In einer Vorrichtung gemäß Fig. 1 wurden Chips aus unterschiedlichen Hölzern zur Vergasung gebracht. Die Anlage wurde mit Atmosphärendruck betrieben. Über die Schleuse 2, die ein Förderrad darstellt, wurden 60 kg/h Chips aus einer Mischung von Lärche, Buche und Tanne gefördert, und auf den Wanderrost 31 zu liegen gebracht. Oberhalb des Wanderrostes beaufschlagen die Plasmabrenner 4 mit ihrem Plasma 30 die Holzchips. Das den Plasmabrennern 4 zugeführte Gas weist gegenüber der Luft erhöhten Kohlendioxidgehalt auf, da die Abgase des Gasmotors 16 teilweise rückgeführt werden. Die Zusammensetzung des Gases ist wie folgt:

| | |
|---|---|
| Sauerstoff: | 8,0 Vo1.-% |
| Kohlendioxid: | 11,1 Vol.-% |
| Kohlenmonoxid: | 1,5 Vol.-% |
| Rest: | Stickstoff, Spuren von NOₓ und unverbrannte Kohlenwasserstoffe |

Die Elektroden 22 und 23 wurden mit einem gepulsten Gleichstrom von 200 V, 110 Å versorgt. Die Holzstückchen werden von dem Plasma beaufschlagt und die entstehenden Oxidationsprodukte fallen nach unten ab. Das aus dem Reaktor nach unten austretende Gas weist eine Temperatur von 450°C auf und hat folgende Zusammensetzung:

| | |
|---|---|
| Sauerstoff: | 1,3 Vol.-% |
| Kohlendioxid: | 6,5 Vol.-% |
| Kohlenmonoxid: | 34,0 Vol.-% |
| Wasserstoff: | 28,0 Vol.-% |
| Stickstoff: | Rest |

Im Gaswäscher wird das Gas auf 25°C abgekühlt und sodann im Filter 12 von den Feststoffen befreit. Im Gasmischer 13 wird Luft zugemischt, worauf die Mischung, die 50 Vol.-% Luft aufweist, im Gasmotor 16 oxidiert wird. Das oxidierte Gas gelangt sodann in die Abgasreinigung 19, um NOₓ und CO abzutrennen. 15 Vol.-% der Verbrennungsgase werden den Plasmabrennern 4 rückgeführt.

## Patentansprüche

1. Verfahren zum Aktivieren, insbesondere zum Vergasen, von Kohlenstoff enthaltenden Substanzen, wobei ein Fluid über in Strömungsrichtung (a) des Fluides hintereinander angeordneten mit Gleichstrom, z. B. gepulster Gleichstrom, gespeisten Elektroden (22, 23) geführt wird, und das Fluid in ein Plasma (30) übergeführt wird, in welches die Kohlenstoff enthaltenden Substanzen eingebracht werden, das gebildete Gas abgezogen wird, und gebildete feste und/oder flüssige Reaktionsprodukte, z. B. Schlacke, Glas, Asche, mit Schwerkraft abgezogen werden, **dadurch gekennzeichnet, dass** die Kohlenstoff enthaltenden Substanzen, insbesondere partikulierte Hölzer, laufend in das Plasma (30) in Abstand und oberhalb der durch Schwerkraft abziehenden festen und/oder flüssigen Reaktionsprodukte eingebracht werden, und das Fluid mit Sauerstoff molekular und/oder chemisch gebunden enthaltende Stoffe, z. B. Gase, verdampfte Flüssigkeiten oder Aeros,ole, gebildet wird, und das gebildete Gas abgezogen, gegebenenfalls gekühlt und/oder gereinigt, und sodann oxidiert wird.

2. Verfahren nach Anspruch 1, **dadurch gekennzeichnet, dass** die Kohlenstoff enthaltenden Substanzen auf einem bewegten Rost (31, 36) vorgelegt werden.

3. Verfahren nach Anspruch 1 oder 2, **dadurch gekennzeichnet, dass** die Kohlenstoff enthaltenden Substanzen auf zumindest einer Schnecke (36), die um ihre Längsachse gedreht wird, vorgelegt werden.

4. Verfahren nach Anspruch 3, **dadurch gekennzeichnet, dass** zumindest eine Schecke (36) um eine etwa horizontale Achse gedreht wird.

5. Verfahren nach einem der Ansprüche 1 bis 4, **dadurch gekennzeichnet, dass** die Kohlenstoff enthaltenden Substanzen auf zumindest einem nach oben gerichteten Gasstrom vorgelegt werden (Fig. 6).

6. Verfahren nach einem der Ansprüche 1 bis 5, **dadurch gekennzeichnet, dass** die mit Schwerkraft abgezogenen, insbesondere abtropfenden, Reaktionsprodukte mit Wasser abgekühlt werden.

7. Verfahren nach Anspruch 6, **dadurch gekennzeichnet, dass** die mit Schwerkraft abgezogenen, insbesondere abtropfenden, Reaktionsprodukte in einem Wasserbad abgekühlt werden.

8. Verfahren nach einem der Ansprüche 1 bis 7, **dadurch gekennzeichnet, dass** die mit Schwerkraft abgezogenen, insbesondere abtropfenden, Reaktionsprodukte auf ein bewegtes endloses Band (31) zum Aufliegen kommen.

9. Verfahren nach einem der Ansprüche 1 bis 7, **dadurch gekennzeichnet, dass** die mit Schwerkraft abgezogenen, insbesondere abtropfenden, Reaktionsprodukte auf einer rotierenden Scheibe (28) zum Aufliegen kommen.

10. Verfahren nach einem der Ansprüche 1 bis 6, **dadurch gekennzeichnet, dass** die, insbesondere flüssigen, Reaktionsprodukte in einer Kokille abkühlen gelassen werden.

11. Verfahren nach einem der Ansprüche 1 bis 10, **dadurch gekennzeichnet, dass** das Gas mit einem Sauerstoff enthaltenden Gas vermischt und einem Gasmotor (16) oder Turbine zugeführt wird.

12. Verfahren nach einem der Ansprüche 1 bis 11, **dadurch gekennzeichnet, dass** ein Luft enthaltendes Fluid zur Bildung des Plasmas (30) verwendet wird.

13. Verfahren nach einem der Ansprüche 1 bis 12, **dadurch gekennzeichnet, dass** das im Gasmotor (16) oder Turbine oxidierte Gas zum Teil über die Elektroden (22, 23) rückgeführt wird.

## Claims

1. A method of activating, particularly gasifying, substances containing carbon, wherein a fluid is passed over electrodes (22, 23), which are arranged behind one another in the flow direction (a) of the fluid and are supplied with direct current, e.g. pulsed direct current, and the fluid is converted into a plasma (30), into which the substances containing carbon are introduced, the gas formed is withdrawn and the solid and/or liquid reaction products which are formed, e.g. slag, glass, ash, are removed by gravity, **characterised in that** the substances containing carbon, particularly particulated wood, are introduced continuously into the plasma (30) spaced from and above the solid and/or liquid reaction products being removed by gravity and the fluid is formed with materials, e.g. gases, vaporised liquids or aerosols, containing oxygen in molecularly and/or chemically bonded form and the gas formed is withdrawn, optionally cooled and/or cleaned and is then oxidised.

2. A method as claimed in Claim 1, **characterised in that** the substances containing carbon are introduced on a moving grating (31, 36).

3. A method as claimed in Claim 1 or 2, **characterised in that** the substances containing carbon are introduced on at least one screw conveyor (36), which is rotated about its longitudinal axis.

4. A method as claimed in Claim 3, **characterised in that** at least one screw conveyor (36) is rotated about an approximately horizontal axis.

5. A method as claimed in one of Claims 1 to 4, **characterised in that** the substances containing carbon are introduced on at least one upwardly directed gas current (Fig. 6).

6. A method as claimed in one of Claims 1 to 5, **characterised in that** the reaction products which are removed with gravity, particularly drip down, are cooled with water.

7. A method as claimed in Claim 6, **characterised in that** the reaction products which are removed with gravity, particularly drip down, are cooled in a water bath.

8. A method as claimed in one of Claims 1 to 7, **characterised in that** the reaction products which are removed with gravity, particularly drip down, come to rest on a moving endless belt (31).

9. A method as claimed in one of Claims 1 to 7, **characterised in that** the reaction products which are removed with gravity, particularly drip down, come to rest on a rotating disc (28).

10. A method as claimed in one of Claims 1 to 6, **characterised in that** the, particularly fluid, reaction products are left to cool in a chill.

11. A method as claimed in one of Claims 1 to 10, **characterised in that** the gas is mixed with a gas containing oxygen and is supplied to a gas motor (16) or turbine.

12. A method as claimed in one of Claims 1 to 11, **characterised in that** a fluid containing air is used to form the plasma (30).

13. A method as claimed in one of Claims 1 to 12, **characterised in that** the gas oxidised in the gas motor (16) or turbine is fed back in part over the electrodes (22, 23).

## Revendications

1. Procédé d'activation, en particulier de gazéification, de substances contenant du carbone, dans lequel un fluide est conduit par des électrodes (22, 23) disposées successivement dans la direction d'écoulement (a) du fluide et alimentées en courant continu tels qu'un courant continu pulsé, le fluide étant transformé en un plasma (30) recevant les substances contenant du carbone, le gaz formé étant extrait et des produits de réaction solides et/ou liquides formés, tels que mâchefer, verre, cendres, étant extraits par gravité, **caractérisé en ce que** les substances contenant du carbone, notamment des particules de bois, sont régulièrement ajoutées au plasma (30), à distance des produits de réaction solides et/ou liquides extraits par gravité et au-dessus de ceux-ci, **en ce que** le fluide est formé avec des substances contenant de l'oxygène moléculairement et/ou chimiquement lié, telles que des gaz, des liquides vaporisés ou des aérosols, et **en ce que** le gaz formé est extrait, refroidi et/ou purifié le cas échéant, avant d'être oxydé.

2. Procédé selon la revendication 1, **caractérisé en ce que** les substances contenant du carbone sont présentées sur une grille mobile (31, 36).

3. Procédé selon la revendication 1 ou la revendication 2, **caractérisé en ce que** les substances contenant du carbone sont présentées sur au moins une vis sans fin (36) rotative autour de son axe longitudinal.

4. Procédé selon la revendication 3, **caractérisé en ce qu'**au moins une vis sans fin (36) est rotative autour d'un axe sensiblement horizontal.

5. Procédé selon l'une des revendications 1 à 4, **caractérisé en ce que** les substances contenant du carbone sont présentées sur au moins un flux gazeux dirigé vers le haut (fig. 6).

6. Procédé selon l'une des revendications 1 à 5, **caractérisé en ce que** les produits de réaction extraits par gravité, en particulier égouttés, sont refroidis par eau.

7. Procédé selon la revendication 6, **caractérisé en ce que** les produits de réaction extraits par gravité, en particulier égouttés, sont refroidis dans un bain d'eau.

8. Procédé selon l'une des revendications 1 à 7, **caractérisé en ce que** les produits de réaction extraits par gravité, en particulier égouttés, se déposent sur une courroie (31) mobile sans fin.

9. Procédé selon l'une des revendications 1 à 7, **caractérisé en ce que** les produits de réaction extraits par gravité, en particulier égouttés, se déposent sur un disque (28) rotatif.

10. Procédé selon l'une des revendications 1 à 6, **caractérisé en ce que** les produits de réaction, en particulier liquides, sont laissés à refroidir dans un moule.

11. Procédé selon l'une des revendications 1 à 10, **caractérisé en ce que** le gaz est mélangé à un gaz contenant de l'oxygène, et conduit vers un moteur à gaz (16) ou une turbine.

12. Procédé selon l'une des revendications 1 à 11, **caractérisé en ce qu'**un fluide contenant de l'air est utilisé pour former le plasma (30).

13. Procédé selon l'une des revendications 1 à 12, **caractérisé en ce que** le gaz oxydé dans le moteur à gaz (16) ou la turbine est partiellement recyclé par les électrodes (22, 23).
